# EUROPEAN PATENT APPLICATION

(11) **EP 4 699 854 A1**
(43) Date of publication of application: **25.02.2026**
(21) Application number: 25173062.8
(22) Date of filing: 29.04.2025
(51) Int. Cl.: B60L 53/22, H02J 7/00, B60L 53/24, B60L 58/19

(54) **CIRCUIT FOR CONTROLLING VOLTAGE AND VEHICLE**

(30) Priority: 21.08.2024 CN 202411155998
(71) Applicant: Xiaomi EV Technology Co., Ltd., 100176 Beijing (CN)
(72) Inventor: LI, Mingqiang, Beijing, 100176 (CN)
(74) Representative: Stöckeler, Ferdinand

(57) **Abstract**

The present invention relates to a circuit (100) for controlling a voltage and a vehicle. The circuit (100) for controlling the voltage includes: a plurality of traction battery banks (110); a first switch (K1), where a first terminal of the first switch (K1) is connected to each of the plurality of traction battery banks; and a drive circuit (120), where the drive circuit (120) includes a three-phase inverter (121) and a three-phase motor (122), where the three-phase inverter (121) is connected to the three-phase motor (122), where a first busbar terminal is connected to each of the plurality of traction battery banks (110) and a charging port, a second busbar terminal is connected to each of the plurality of traction battery banks (110) and the charging port, and where the three-phase motor (122) is connected to a second terminal of the first switch (K1).

## Description

### TECHNICAL FIELD

The present invention relates to the technical field of vehicles, and in particular to a circuit for controlling a voltage and a vehicle.

### BACKGROUND OF THE INVENTION

With the gradual development of the automobile industry, a large number of electric vehicles have appeared on the market. Powered by on-board power supply, the electric vehicles are driven to travel. As the electric vehicles keep increasing, charging piles emerge to charge the electric vehicles and provide energy to drive the vehicles.

### SUMMARY OF THE INVENTION

In order to solve problems existing in the related art, the present invention provides a circuit for controlling a voltage and a vehicle.

According to a first aspect of embodiments of the present invention, a circuit for controlling a voltage is provided. The circuit for controlling the voltage includes:
a plurality of traction battery banks;
a first switch K1, where a first terminal of the first switch K1 is connected to each of the plurality of traction battery banks; and
a drive circuit, where the drive circuit includes a three-phase inverter and a three-phase motor, a midpoint of each of three-phase bridge arms of the three-phase inverter is connected to each of three-phase coils of the three-phase motor respectively, where a first terminal of each of the three-phase bridge arms is connected together to form a first busbar terminal, and a second terminal of each of the three-phase bridge arms is connected together to form a second busbar terminal, where the first busbar terminal is connected to a positive electrode of each of the plurality of traction battery banks and a positive electrode of a charging port, the second busbar terminal is connected to a negative electrode of each of the plurality of traction battery banks and a negative electrode of the charging port, and where the three-phase motor is connected to a second terminal of the first switch K1.

Optionally, the plurality of traction battery banks comprises a first traction battery bank and a second traction battery bank, and the circuit for controlling the voltage further includes:
a second switch K2, where the second switch K2 is connected to the first switch K1;
where a positive electrode of the first traction battery bank is coupled to the first busbar terminal, and a negative electrode of the first traction battery bank is connected to a first terminal of the second switch K2; and
where a positive electrode of the second traction battery bank is connected to a second terminal of the second switch K2 and the first busbar terminal, and a negative electrode of the second traction battery bank is coupled to the second busbar terminal.

Optionally, the circuit for controlling the voltage further includes:
a third switch K3, where a first terminal of the third switch K3 is connected to the negative electrode of the first traction battery bank, and a second terminal of the third switch K3 is coupled to the negative electrode of the second traction battery bank; and
a fourth switch K4, where a first terminal of the fourth switch K4 is connected to the second terminal of the second switch K2 and the positive electrode of the second traction battery bank, and a second terminal of the fourth switch K4 is connected to the positive electrode of the first traction battery bank.

Optionally, the circuit for controlling the voltage further includes:
a fifth switch K5, where a first terminal of the fifth switch K5 is connected to the first traction battery bank and the fourth switch K4, and a second terminal of the fifth switch K5 is connected to the first busbar terminal; and
a sixth switch K6, where a first terminal of the sixth switch K6 is connected to the third switch K3 and the second traction battery bank, and a second terminal of the sixth switch K6 is connected to the second busbar terminal;
optionally, the drive circuit further includes:
   a drive capacitor Cx, where a first terminal of the drive capacitor Cx is connected to the second terminal of the fifth switch K5 and the first busbar terminal, and a second terminal of the drive capacitor Cx is connected to the second terminal of the sixth switch K6 and the second busbar terminal.

Optionally, the circuit for controlling the voltage further includes:
a seventh switch K7, where a first terminal of the seventh switch K7 is connected to the first busbar terminal, and a second terminal of the seventh switch K7 is connected to the positive electrode of the charging port; and
an eighth switch K8, where a first terminal of the eighth switch K8 is connected to the second busbar terminal, and a second terminal of the eighth switch K8 is connected to the negative electrode of the charging port.

Optionally, the circuit for controlling the voltage is configured to:
control the third switch K3 and the fourth switch K4 to be closed to implement dual-bank parallel connection;
control the first switch K1 and the sixth switch K6 to be closed to implement energization on a low-voltage side; and
control the seventh switch K7 and the eighth switch K8 to be closed to implement energization of the charging port.

Optionally, the circuit for controlling the voltage is further configured to:
control an upper bridge arm of each of the three-phase bridge arms to be closed to cause a charging pile to charge each of the plurality of traction battery banks and each of the three-phase coils;
control the upper bridge arm of each of the three-phase bridge arms to be opened, and control a lower bridge arm of each of the three-phase bridge arms to be closed to cause each of the three-phase coils to charge each of the plurality of traction battery banks, and
repeatedly control the upper bridge arm of each of the three-phase bridge arms to be closed, control the upper bridge arm of each of the three-phase bridge arms to be opened, and control the lower bridge arm of each of the three-phase bridge arms to be closed to implement step-down charging.

Optionally, the midpoint of each of three-phase bridge arms of the three-phase inverter is connected to a first terminal of each of three-phase coils of the three-phase motor respectively, and a second terminal of each of the three-phase coils of the three-phase motor is connected together to form a neutral point, where the neutral point is connected to the second terminal of the first switch K1, or a first terminal of a phase coil among the three-phase coils of the three-phase motor is connected to the second terminal of the first switch K1, and a second terminal of each of the three-phase coils of the three-phase motor is connected together.

According to the second aspect of the embodiments of the present invention, a vehicle is provided. The vehicle includes a circuit for controlling a voltage, where the circuit for controlling the voltage includes:
a plurality of traction battery banks;
a first switch K1, where a first terminal of the first switch K1 is connected to each of the plurality of traction battery banks; and
a drive circuit, where the drive circuit includes a three-phase inverter and a three-phase motor, a midpoint of each of three-phase bridge arms of the three-phase inverter is connected to each of three-phase coils of the three-phase motor respectively, where a first terminal of each of the three-phase bridge arms is connected together to form a first busbar terminal, and a second terminal of each of the three-phase bridge arms is connected together to form a second busbar terminal, where the first busbar terminal is connected to a positive electrode of each of the plurality of traction battery banks and a positive electrode of a charging port, the second busbar terminal is connected to a negative electrode of each of the plurality of traction battery banks and a negative electrode of the charging port, and where the three-phase motor is connected to a second terminal of the first switch K1.

Optionally, the plurality of traction battery banks comprises a first traction battery bank and a second traction battery bank, and the circuit for controlling the voltage further includes:
a second switch K2, where the second switch K2 is connected to the first switch K1;
where a positive electrode of the first traction battery bank is coupled to the first busbar terminal, and a negative electrode of the first traction battery bank is connected to a first terminal of the second switch K2; and
where a positive electrode of the second traction battery bank is connected to a second terminal of the second switch K2 and the first busbar terminal, and a negative electrode of the second traction battery bank is coupled to the second busbar terminal.

Optionally, the circuit for controlling the voltage further includes:
a third switch K3, where a first terminal of the third switch K3 is connected to the negative electrode of the first traction battery bank, and a second terminal of the third switch K3 is coupled to the negative electrode of the second traction battery bank; and
a fourth switch K4, where a first terminal of the fourth switch K4 is connected to the second terminal of the second switch K2 and the positive electrode of the second traction battery bank, and a second terminal of the fourth switch K4 is connected to the positive electrode of the first traction battery bank.

Optionally, the circuit for controlling the voltage further includes:
a fifth switch K5, where a first terminal of the fifth switch K5 is connected to the first traction battery bank and the fourth switch K4, and a second terminal of the fifth switch K5 is connected to the first busbar terminal; and
a sixth switch K6, where a first terminal of the sixth switch K6 is connected to the third switch K3 and the second traction battery bank, and a second terminal of the sixth switch K6 is connected to the second busbar terminal;
optionally, the drive circuit further includes:
   a drive capacitor Cx, where a first terminal of the drive capacitor Cx is connected to the second terminal of the fifth switch K5 and the first busbar terminal, and a second terminal of the drive capacitor Cx is connected to the second terminal of the sixth switch K6 and the second busbar terminal.

Optionally, the circuit for controlling the voltage further includes:
a seventh switch K7, where a first terminal of the seventh switch K7 is connected to the first busbar terminal, and a second terminal of the seventh switch K7 is connected to the positive electrode of the charging port; and
an eighth switch K8, where a first terminal of the eighth switch K8 is connected to the second busbar terminal, and a second terminal of the eighth switch K8 is connected to the negative electrode of the charging port.

Optionally, the circuit for controlling the voltage is configured to:
control the third switch K3 and the fourth switch K4 to be closed to implement dual-bank parallel connection;
control the first switch K1 and the sixth switch K6 to be closed to implement energization on a low-voltage side; and
control the seventh switch K7 and the eighth switch K8 to be closed to implement energization of the charging port.

Optionally, the circuit for controlling the voltage is further configured to:
control an upper bridge arm of each of the three-phase bridge arms to be closed to cause a charging pile to charge each of the plurality of traction battery banks and each of the three-phase coils;
control the upper bridge arm of each of the three-phase bridge arms to be opened, and control a lower bridge arm of each of the three-phase bridge arms to be closed to cause each of the three-phase coils to charge each of the plurality of traction battery banks, and
repeatedly control the upper bridge arm of each of the three-phase bridge arms to be closed, control the upper bridge arm of each of the three-phase bridge arms to be opened, and control the lower bridge arm of each of the three-phase bridge arms to be closed to implement step-down charging.

Optionally, the midpoint of each of three-phase bridge arms of the three-phase inverter is connected to a first terminal of each of three-phase coils of the three-phase motor respectively, and a second terminal of each of the three-phase coils of the three-phase motor is connected together to form a neutral point, where the neutral point is connected to the second terminal of the first switch K1, or a first terminal of a phase coil among the three-phase coils of the three-phase motor is connected to the second terminal of the first switch K1, and a second terminal of each of the three-phase coils of the three-phase motor is connected together.

The circuit for controlling the voltage in the present invention may include the plurality of traction battery banks, the first switch K1 and the drive circuit. The first terminal of the first switch K1 is connected to each of the plurality of traction battery banks. The drive circuit includes the three-phase inverter and the three-phase motor. The midpoint of each of the three-phase bridge arms of the three-phase inverter is connected to each of the three-phase coils of the three-phase motor respectively. The first terminal of each of the three-phase bridge arms is connected together to form the first busbar terminal. The second terminal of each of the three-phase bridge arms is connected together to form the second busbar terminal. The first busbar terminal is connected to the positive electrode of each of the plurality of traction battery banks and the positive electrode of the charging port. The second busbar terminal is connected to the negative electrode of each of the plurality of traction battery banks and the negative electrode of the charging port. The three-phase motor is connected to the second terminal of the first switch K1. The plurality of battery banks can be flexibly charged or discharged by controlling the first switch.

It should be understood that both the foregoing general description and the following detailed description are illustrative and interpretative merely and do not limit the present invention.

### BRIEF DESCRIPTION OF DRAWINGS

The accompanying drawings are incorporated in the description as a constituent part of the description, illustrate embodiments conforming to the present invention, and serve to explain the principles of the present invention together with the description.
FIG. 1 is a schematic diagram of a design of multi-bank series-parallel connection according to an example;
FIG. 2 is a schematic diagram of a circuit for controlling a voltage according to an example;
FIG. 3 is a schematic diagram of a circuit for controlling a voltage including a plurality of traction battery banks according to an example;
FIG. 4 is a schematic diagram showing that a first terminal of a three-phase coil among three-phase coils is connected to a first switch in a circuit for controlling a voltage according to an example;
FIG. 5 is a schematic diagram of a circuit for controlling a voltage including a ninth switch and a tenth switch according to an example;
FIG. 6 is a schematic diagram of a closing condition of switches during charging of a circuit for controlling a voltage according to an example;
FIG. 7 is a schematic diagram of a flow of a current when an upper bridge arm in a circuit for controlling a voltage is closed according to an example;
FIG. 8 is a schematic diagram of a flow of a current when a lower arm in a circuit for controlling a voltage is closed according to an example; and
FIG. 9 is a block diagram of a vehicle according to an example.

### DETAILED DESCRIPTION OF THE INVENTION

Description will be made in detail to examples here, and their instances are illustrated in the accompanying drawings. When the following description relates to the accompanying drawings, the same numbers in different accompanying drawings denote the same or similar elements, unless indicated otherwise. The implementations described in the following examples do not represent all implementations consistent with the present invention. Rather, they are merely instances of devices and methods consistent with some aspects of the present invention as detailed in the appended claims.

Description will be made in detail to examples here, and their instances are illustrated in the accompanying drawings. When the following description relates to the accompanying drawings, the same numbers in different accompanying drawings denote the same or similar elements, unless indicated otherwise. The implementations described in the following examples do not represent all implementations consistent with the present invention. Rather, they are merely instances of devices and methods consistent with some aspects of the present invention as detailed in the appended claims.

In the description of the present invention, terms "first", "second" and the like are used to distinguish between similar objects and are not necessarily to be understood as a particular order or a sequential order. In addition, unless otherwise stated, in the description with reference to the drawings, the same numeral in different drawings represents the same element.

The implementations described in the following some embodiments in the present invention do not denote all implementations consistent with the present invention. Rather, they are merely instances of devices and methods consistent with some aspects of the present invention as detailed in the appended claims.

In the related art, most battery banks of electric vehicles are low-voltage single battery banks. In order to improve a charging rate and acceleration performance, high-voltage (1000V) battery banks appear. However, limited to deployment of low-voltage (500V) charging piles, high-voltage vehicles cannot be charged by the low-voltage charging piles, such that user experience is influenced.

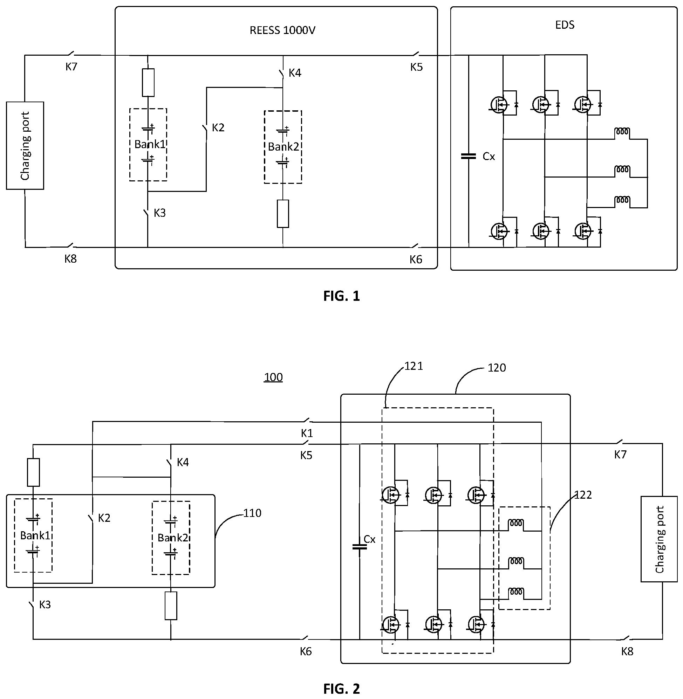

In some implementations, a design mode of multi-bank series-parallel connection is used, such that a high-voltage battery bank can be connected in parallel to a low-voltage charging pile to reduce a battery bank voltage, and then charged by the low-voltage charging pile. A detailed structure is shown in FIG. 1. According to a series-parallel connection architecture of the battery bank shown in FIG. 1, a high-voltage platform battery is compatible with a low-voltage or medium-voltage charging pile. However, since a voltage of the entire battery bank becomes lower after parallel connection, power of a high-voltage vehicle is less during charging by the medium-voltage charging pile, and because of a charging current limited in a national standard or other standards, e.g., a current limit of less than 250 A, the lower the voltage is, the lower maximum charging power is. That is, in the related art, there is a mismatch between the voltage of the charging pile and the voltage of a traction battery, so that the charging efficiency of the battery bank is low. Thus, how to better charge the battery bank is an urgent technical problem to be solved.

Illustratively, a high-voltage platform (e.g., 1000V) battery is compatible with a low-voltage (e.g., 500V) charging pile and a medium-voltage (e.g., 750V) charging pile through the battery bank series-parallel connection architecture. However, since the battery banks are connected in parallel, the voltage is lower than 500 V, resulting in a lower charging voltage and lower charging power.

In some implementations, when compatible with the low-voltage (e.g., 500V) charging pile and the medium-voltage (e.g., 750V) charging pile, a multi-battery-bank system may be charged in parallel, during which the battery bank system may be changed from a 1000 V voltage system to a 500 V voltage system. In this case, when a maximum charging voltage of a vehicle on the 500 V charging pile is 500 V and an upper limit of current is 250A, maximum power is 500V * 250A = 125 kw. Similarly, when the vehicle is charged by the 750 V charging pile, since a maximum charging voltage of the battery bank is 500 V, maximum power is also 500 V * 250 A = 125 kw.

Although the series-parallel connection architecture in the related art can be compatible with functions of the 500 V charging pile and the 750V charging pile, the maximum charging power on such charging piles is not greater than 125 kw, and there are a large number of 150 kw and 180 kw charging piles on the market, resulting in poorer performance of vehicles on such charging piles compared with single bank charging.

In order to solve the above problems, the embodiments of the present invention provide a circuit for controlling a voltage. The circuit for controlling the voltage may be a step-down control architecture. Based on the architecture, the charging pile can perform charging according to a highest voltage and maximum power, thus a problem that the charging voltage and charging power are too low when the series-parallel connection architecture is charged by the low-voltage charging pile or the medium-voltage charging pile. That is, the series-parallel connection architecture can be charged at full power according to the highest voltages of the charging piles on all voltage charging piles.

FIG. 2 is a block diagram of a circuit for controlling a voltage according to an example. As shown in FIG. 2, the circuit for controlling the voltage 100 may include a plurality of traction battery banks 110, a first switch K1, and a drive circuit 120.

In the embodiments of the present invention, the circuit for controlling the voltage may include a rechargeable energy storage system (REESS). The rechargeable energy storage system may include a plurality of traction battery banks configured to be connected in series and parallel.

Moreover, the rechargeable energy storage system may include two traction battery banks. As shown in FIG. 2, the circuit for controlling the voltage 100 may include a first traction battery bank Bank 1 and a second traction battery bank Bank 2. The first traction battery bank Bank 1 and the second traction battery bank Bank 2 may be connected in series through a second switch K2.

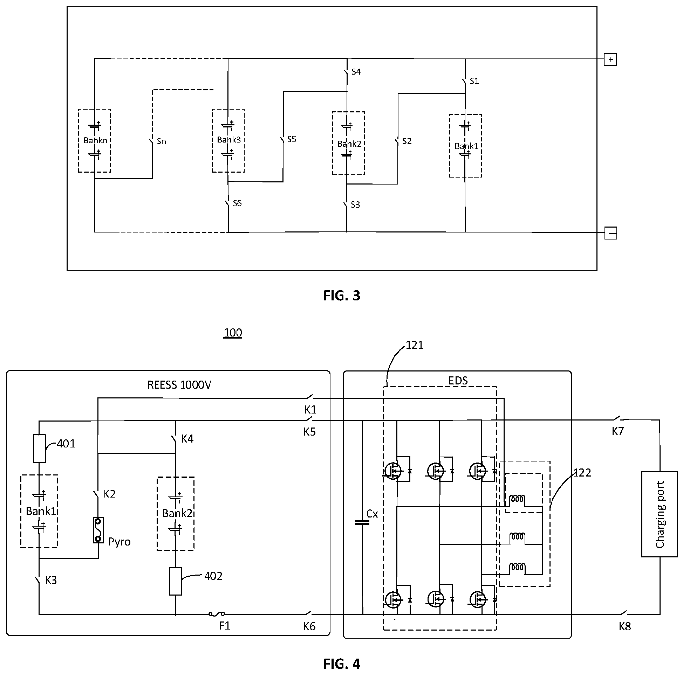

Optionally, a number of the plurality of traction battery banks may also be greater than two. As shown in FIG. 3, the circuit for controlling the voltage 100 may include n traction battery banks. The n traction battery banks may be Bank 1, Bank 2, Bank 3, Bank n, where n > 2, and these traction battery banks can be connected in series through switches. As shown in FIG. 3, the traction battery bank Bank 1 and the traction battery bank Bank 2 may be connected in series through the switch S2. The traction battery bank Bank 2 and the traction battery bank Bank 3 may be connected in series through a switch S5. The traction battery bank Bank 3 and the traction battery bank Bank n may be connected in series through a switch Sn.

In the embodiments of the present invention, series-parallel connection of a dual-bank architecture is taken as an instance to illustrate a process of charging a vehicle. A number of a battery bank included in the circuit for controlling the voltage may be more than two. The specific number of the traction battery banks included is not explicitly limited here.

In some implementations, a first terminal of the first switch K1 may be connected to each of the plurality of traction battery banks. Specifically, the first terminal of the first switch K1 may be coupled to a negative electrode of the first traction battery bank Bank 1 and may be connected to a positive electrode of the second traction battery bank Bank 2.

In some implementations, the drive circuit 120 may include a three-phase inverter 121 and a three-phase motor 122. A midpoint of each of the three-phase bridge arms of the three-phase inverter 121 is connected to each of the three-phase coils of the three-phase motor 122 respectively. In addition, a first terminal of each of the three-phase bridge arms may be connected together to form a first busbar terminal. A second terminal of each of the three-phase bridge arms may be connected together to form a second busbar terminal. The first busbar terminal may be connected to a positive electrode of each of the plurality of traction battery banks and a positive electrode of a charging port. The second busbar terminal may be connected to a negative electrode of each of the plurality of traction battery banks and a negative electrode of the charging port. Moreover, the three-phase motor 122 may be connected to a second terminal of the first switch K1.

In a specific implementation, the circuit for controlling the voltage may include a second switch K2. The plurality of traction battery banks may include a first traction battery bank Bank 1 and a second traction battery bank Bank 2. The second switch K2 may be connected to the first switch K1, that is, a second terminal of the second switch K2 may be connected to the first terminal of the first switch K1. In addition, a positive electrode of the first traction battery bank Bank 1 may be coupled to the first busbar terminal of the three-phase inverter 121. A negative electrode of the first traction battery bank Bank 1 may be connected to a first terminal of the second switch K2. A positive electrode of the second traction battery bank Bank 2 may be connected to the second terminal of the second switch K2 and the first busbar terminal. A negative electrode of the second traction battery bank Bank 2 may be coupled to the second busbar terminal of the three-phase inverter 121.

Optionally, the circuit for controlling the voltage may include a third switch K3 and a fourth switch K4. A first terminal of the third switch K3 may be connected to the negative electrode of the first traction battery bank Bank 1. A second terminal of the third switch K3 may be coupled to the negative electrode of the second traction battery bank Bank 2. A first terminal of the fourth switch K4 may be connected to the second terminal of the second switch K2 and the positive electrode of the second traction battery bank Bank 2. A second terminal of the fourth switch K4 may be connected to the positive electrode of the first traction battery bank Bank 1.

In addition, the circuit for controlling the voltage may further include a fifth switch K5 and a sixth switch K6. A first terminal of the fifth switch K5 may be connected to the first traction battery bank and the fourth switch K4. A second terminal of the fifth switch K5 may be connected to the first busbar terminal. A first terminal of the sixth switch K6 may be connected to the third switch K3 and the second traction battery bank Bank 2. A second terminal of the sixth switch K6 may be connected to the second busbar terminal of the three-phase inverter 121.

In some other implementations, the drive circuit may further include a drive capacitor Cx. A first terminal of the drive capacitor Cx may be connected to the second terminal of the fifth switch K5 and the first busbar terminal of the three-phase inverter 121. A second terminal of the drive capacitor Cx may be connected to the second terminal of the sixth switch K6 and the second busbar terminal of the three-phase inverter 121. By pre-charging the drive capacitor Cx, step-down charging for the battery bank can be implemented.

Optionally, the circuit for controlling the voltage may further include a seventh switch K7 and an eighth switch K8. The first switch K7 and the eighth switch K8 are used for controlling charging for the traction battery bank. A first terminal of the seventh switch K7 may be connected to the first busbar terminal of the three-phase inverter 121. A second terminal of the seventh switch K7 may be connected to the positive electrode of the charging port. In addition, a first terminal of the eighth switch K8 may be connected to the second busbar terminal of the three-phase inverter 121. A second terminal of the eighth switch K8 may be connected to the negative electrode of the charging port.

Here, the seventh switch K7 and the eighth switch K8 may be positive and negative relays of the charging port. The positive and negative relays of the charging port in the embodiments of the present invention may be directly connected to a direct current side of an electric drive, that is, the relays do not need to be connected in the battery bank.

In the embodiments of the present invention, a second terminal of each of the three-phase coils of the three-phase motor 122 may be connected together to form a neutral point. The neutral point may be connected to the second terminal of the first switch K1, that is, the three-phase motor 122 may be wired from the neutral point and then connected to the first switch K1 through the neutral point. In other words, the second terminal of the first switch K1 may be connected to the neutral point formed by connecting each of the three-phase coils together, as shown in detail in FIG. 2. The neutral point connection may be implemented by an N-wire tap.

Optionally, a first terminal of each of the three-phase coils of the three-phase motor 122 may be connected to the second terminal of the first switch K1. Here, the first terminal of each of the three-phase coils may be a first terminal of a phase coil among the three-phase coils. For example, the first terminal of each of the three-phase coils may be a first terminal of a first-phase coil, or the first terminal of each of the three-phase coils may also be a first terminal of a second-phase coil or a third-phase coil. That is, a bridge arm of each of the three-phase bridge arms leads out a wire and is connected to the first switch K1 through the wire, that is, the second terminal of the first switch K1 may be connected to the bridge arm of each of the three-phase bridge arms, as shown in detail in FIG. 4. It can be known from FIG. 4 that the wire may be wired from one bridge arm through a phase-wire tap.

In addition, no matter whether it is the N-wire tap or the phase-wire tap, a relay may be added to a harness of the two taps. The relay may be the first switch K1. It is known from the above description that the first switch K1 may be connected to a neutral point of the battery bank.

Optionally, the circuit for controlling the voltage 100 may further include a first current sensor and a second current sensor. The first current sensor and the second current sensor may be shunts. The first current sensor may be used for measuring a current of the first traction battery bank Bank 1. The second current sensor may be used for measuring a current of the second traction battery bank Bank 2.

Optionally, the circuit for controlling the voltage 100 may further include a fuse Pyro. The fuse Pyro is used for overcurrent protection, protection against damage to the traction battery bank and protection against reverse currents.

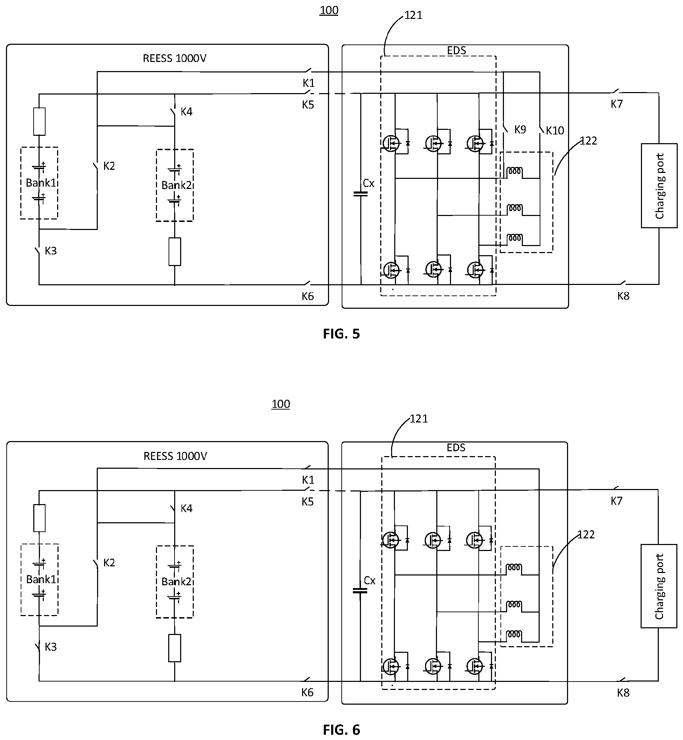

With reference to FIG. 5, the circuit for controlling the voltage 100 may further include a ninth switch K9 and a tenth switch K10. The second terminal of the first switch K1 may be connected to the ninth switch K9 and the tenth switch K10. Specifically, a first terminal of the ninth switch K9 may be connected to the second terminal of the first switch K1. A second terminal of the ninth switch K9 may be connected to the first terminal of each of the three-phase coils of the three-phase motor 122. A first terminal of the tenth switch K10 may be connected to the second terminal of the first switch K1. A second terminal of the tenth switch K10 may be connected to the neutral point formed by connecting the second terminal of each of the three-phase coils together. The ninth switch K9 and the tenth switch K10 may be controlled to be opened or closed according to an actual situation.

As an optional manner, the circuit for controlling the voltage 100 may be configured to control the third switch K3 and the fourth switch K4 to be closed to realize dual-bank series connection. That is, the first traction battery bank Bank 1 and the second traction battery bank Bank 2 may be connected in parallel by closing the third switch K3 and the fourth switch K4, so as to form a battery system, such as a 500V battery system.

On this basis, the circuit for controlling the voltage 100 may control the first switch K1 and the sixth switch K6 to be closed to implement energization on a low-voltage side, and then control the seventh switch K7 and the eighth switch K8 to implement energization of the charging port. That is, after the dual-bank parallel connection is implemented by controlling the switches in the embodiments of the present invention, the first switch K1 and the sixth switch K6 may be closed to complete energization on the low-voltage side, and then the seventh switch K7 and the eighth switch K8 may be closed to wait for output from the charging pile. In this case, a switching state of each switch in the circuit for controlling the voltage 100 may be as shown in FIG. 6. As can be seen from FIG. 6, the fifth switch K5 is in an opened state in this case to avoid direct current charging.

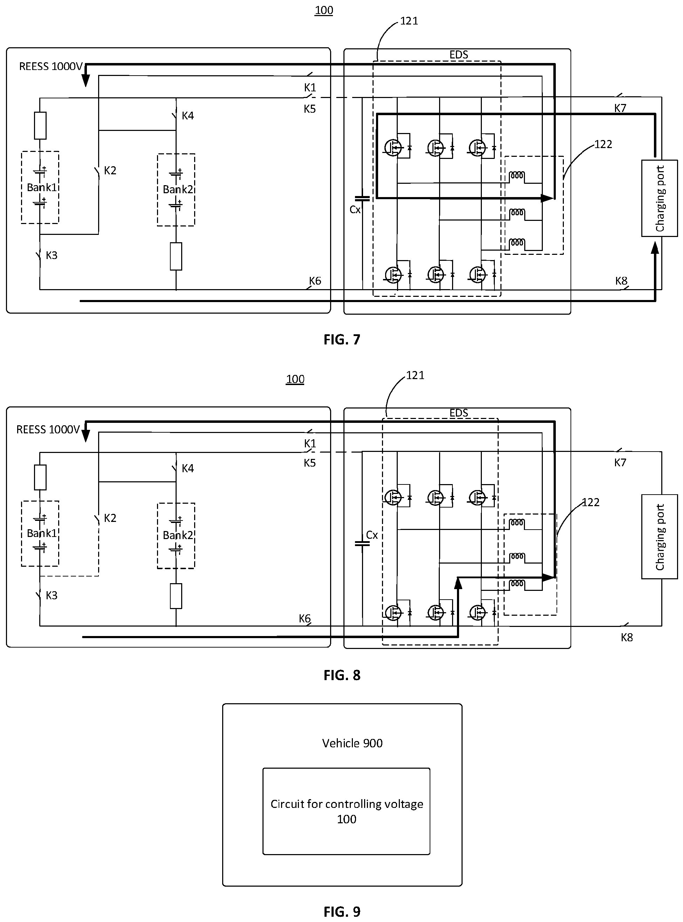

As another optional manner, the circuit for controlling the voltage 100 may be further configured to control an upper bridge arm of each of the three-phase bridge arms to be closed to cause a charging pile to charge each of the plurality of traction battery banks and each of the three-phase coils. That is, in the embodiments of the present invention, an upper bridge of the electric drive may be opened first, such that the charging pile may charge a motor inductor and the traction battery bank simultaneously, and a current flow direction may be as shown in FIG. 7.

As can be seen from FIG. 7, after the third switch K3, the fourth switch K4, the first switch K1, the sixth switch K6 are closed, and the seventh switch K7 and the eighth switch K8 are closed to charge the first traction battery bank Bank 1, the current flow direction may be from the positive electrode of the charging port, the seventh switch K7, the upper bridge arm of each of the three-phase bridge arms, each of the three-phase coils, the first switch K1, the fourth switch K4, the first traction battery bank Bank 1, the third switch K3, the sixth switch K6, and the eighth switch K8 to the negative electrode of the charging port.

Optionally, when the second traction battery bank Bank 2 is charged, the current flow direction may be from the positive electrode of the charging port, the seventh switch K7, the upper bridge arm of each of the three-phase bridge arms, each of the three-phase coils, the first switch K1, the second traction battery bank Bank 2, the sixth switch K6, and the eighth switch K8 to the negative electrode of the charging port.

In addition, after the upper bridge arm is closed for a period of time, the embodiments of the present invention may control the upper bridge arm of each of the three-phase bridge arms to be opened, control the lower bridge arm of each of the three-phase bridge arms to be closed to cause each of the three-phase coils to charge each of the plurality of traction battery banks. That is, in the embodiments of the present invention, after the upper bridge of the electric drive is closed for the period of time, the upper bridge of the electric drive may be opened, and a lower bridge of the electric drive may be closed, such that a follow current of the motor inductor continues to charge the battery bank, that is, the current flows back to the inductor through the lower bridge of the electric drive, and the current flow direction in this case may be as shown in FIG. 8.

As can be seen from FIG. 8, when the first traction battery bank Bank 1 is charged through the coils, a current flow direction may be from the first terminal of each of the three-phase coils, the first switch K1, the fourth switch K4, the first traction battery bank Bank 1, the third switch K3, the sixth switch K6, and the lower bridge arm of each of the three-phase bridge arms to the second terminal of each of the three-phase coils.

Optionally, when the second traction battery bank Bank 2 is charged through the coils, a current flow direction may be from the first terminal of each of the three-phase coils, the first switch K1, the second traction battery bank Bank 2, the sixth switch K6, and the lower bridge arm of each of the three-phase bridge arms to the second terminal of each of the three-phase coils.

By repeatedly closing the upper bridge arm and the lower bridge arm, the embodiments of the present invention may realize step-down charging, that is, step-down charging may be implemented by repeating the above control. In this case, the charging pile may output at the highest voltage.

In summary, the circuit for controlling the voltage 100 in the embodiments of the present invention may achieve that the battery bank may still be charged at full power according to the maximum voltage of the low-voltage charging pile or the medium-voltage charging pile. That is, the circuit for controlling the voltage may not only achieve compatibility of low-voltage charging piles, but also achieve full performance of low-voltage charging piles and medium voltage charging piles.

According to the technical solution, the plurality of traction battery banks may be connected in series and in parallel, such that high-voltage charging and discharging can be implemented during series connection, and a charging function of the low-voltage charging piles can be implemented. In addition, the embodiments of the present invention may improve the charging power with a small amount of modification, and may implement power-increased and step-down charging at lower cost.

As a specific implementation, when the voltage of the charging pile is 1000 V, in a case where the fifth switch K5, the sixth switch K6, the second switch K2, the seventh switch K7 and the eighth switch K8 are controlled to be closed, direct charging or direct discharging by the charging pile may be implemented, and maximum charging peak power in this case is 1000 V * 250 A = 250 kw.

Optionally, when the voltage of the charging pile is 1000 V, the embodiments of the present invention may implement high-voltage and high-power charging and discharging based on the circuit for controlling the voltage 100. Specifically, the first switch K1, the sixth switch K6, the third switch K3, the fourth switch K4, the seventh switch K7 and the eighth switch K8 are controlled to be closed to implement power-increased and step-down charging. In this case, the circuit for controlling the voltage 100 may maintain the maximum constant power of 1000 V * 250 A = 250 kw in the whole course.

As another specific implementation, when the voltage of the charging pile is 750 V, in a case where the fifth switch K5, the sixth switch K6, the third switch K3, the fourth switch K4, the seventh switch K7, and the eighth switch K8 are controlled to be closed, the direct charging by the voltage charging pile may be implemented, and maximum charging peak power is 500 V * 250 A = 125 kw.

Optionally, when the voltage of the charging pile is 750 V, the embodiments of the present invention may control the first switch K1, the sixth switch K6, the third switch K3, the fourth switch K4, the seventh switch K7 and the eighth switch K8 to be closed to implement power-increased and step-down charging. In this case, the circuit for controlling the voltage 100 may maintain the maximum constant power of 750 V * 250 A = 187.5 kw in the whole course.

As another specific implementation, when the voltage of the charging pile is 500V, in a case where the fifth switch K5, the sixth switch K6, the third switch K3, the fourth switch K4, the seventh switch K7, and the eighth switch K8 are controlled to be closed, the direct charging by the voltage charging pile may be implemented, and maximum charging peak power is 500 V * 250 A = 125 kw.

Optionally, when the voltage of the charging pile is 750 V, the embodiments of the present invention may control the first switch K1, the sixth switch K6, the third switch K3, the fourth switch K4, the seventh switch K7 and the eighth switch K8 to be closed to implement power-increased and step-down charging. In this case, the circuit for controlling the voltage 100 may maintain the maximum constant power of 500 V * 250 A = 125 kw in the whole course.

In order to better illustrate the advantages of charging power of this solution on different charging piles, the following Table 1 is provided. It can be seen from Table 1 that in a 500 V parallel-connection step-down and power-increased state, the embodiments of the present invention may achieve whole-course constant power of 250 kw under a 1000 V charging pile, whole-course constant power of 187.5 kw under a 750 V charging pile, and whole-course constant power of 125 kw under a 500 V charging pile. That is, the embodiments of the present invention may improve the charging power of the charging pile below 1000 V, and thus may shorten charging time.

**Table 1**

| 1000 V battery bank assembly state | 1000 V charging pile | 750 V charging pile | 500 V charging pile |
|---|---|---|---|
| 1000 V series-connection state | Maximum peak power 250 kW | NA | NA |
| 1000 V series-connection step-down and power-increased | Unachievable | NA | NA |
| 500 V parallel-connection state | Maximum peak power 125 kW | Maximum peak power 125 kW | Maximum peak power 125 kW |
| 500 V parallel-connection step-down and power-increased | Whole-course constant power 250 kw | Whole-course constant power 187.5 kw | Whole-course constant power 125 kw |

Based on the embodiments of the present invention, a compatibility problem caused when a 1000 V high-voltage platform (battery bank) is charged by a low-voltage (< 1000 V) charging pile can be solved, and a problem of low power caused when the 1000 V high-voltage platform (battery bank) is charged by the low-voltage (< 1000 V) charging pile can be solved. That is, the embodiments of the present invention can achieve charging compatibility of full-voltage platforms and full-voltage and full-power charging by all charging piles, so as to fully use all power of the charging piles.

The circuit for controlling the voltage in the embodiments of the present invention may include the plurality of traction battery banks, the first switch K1 and the drive circuit. The first terminal of the first switch K1 is connected to each of the plurality of traction battery banks. The drive circuit includes the three-phase inverter and the three-phase motor. The midpoint of each of the three-phase bridge arms of the three-phase inverter is connected to each of the three-phase coils of the three-phase motor respectively. The first terminal of each of the three-phase bridge arms is connected together to form the first busbar terminal. The second terminal of each of the three-phase bridge arms is connected together to form the second busbar terminal. The first busbar terminal is connected to the positive electrode of each of the plurality of traction battery banks and the positive electrode of the charging port. The second busbar terminal is connected to the negative electrode of each of the plurality of traction battery banks and the negative electrode of the charging port. The three-phase motor is connected to the second terminal of the first switch K1. The plurality of battery banks can be flexibly charged or discharged by controlling the first switch.

FIG. 9 is a block diagram of a vehicle according to an example. The circuit for controlling the voltage 100 shown in the embodiments of the present invention is arranged on the vehicle 900.

Further, the word "illustrative" is used here to serve as an example, instance, or illustration. Any aspect or design described as "illustrative" here is not necessarily to be construed as advantageous over other aspects or designs. Rather, "illustrative" is used for presenting a concept in a concrete way. As used here, the term "or" is intended to mean an inclusive "or" rather than an exclusive "or". That is, unless otherwise specified, or clear from the context, "X applies A or B" is intended to indicate any of natural inclusive permutations. That is, in a case where X applies A; X applies B; or X applies both A and B, "X applies A or B" is satisfied under any of the foregoing instances. Moreover, articles "a" and "an" as used in the present application and the appended claims are generally understood as "one or more" unless otherwise specified or clearly directed to a singular form from the context.

Similarly, although the present invention has been shown and described with respect to one or more implementations, equivalent variations and modifications will occur to those skilled in the art upon reading and understanding the description and the accompanying drawings. The present invention includes all such modifications and variations, and is limited only by the scope of the claims. In particular regard to the various functions performed by the above described components (for example, elements and resources), the terms used to describe such components are intended to correspond, unless otherwise indicated, to any component which performs the specified function of the described component that is functionally equivalent, even though not structurally equivalent to the disclosed structure. In addition, while a particular feature of the present invention may have been disclosed with respect to only one of several implementations, such a feature may be combined with one or more other features of the other implementations as may be desired and advantageous for any given or particular application. Furthermore, for "comprise", "include", "have" or their variations used in a particular embodiment or claim, such terms are intended to be inclusive in a manner similar to the term "encompass".

It should be understood that the present invention is not limited to precise structures that have been described above and shown in the accompanying drawings, and various modifications and changes can be made without departing from the scope of the present invention. The scope of the present invention is limited merely by the appended claims.

In the above detailed description, reference is made to the accompanying drawings, and certain aspects of the present invention that may be practiced are shown by way of illustration. In this regard, terms such as "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial" and "circumferential" that indicate directions or indicate position relationships may be used with reference to orientations of the drawings being described. Since the components of the described device may be oriented in a number of different orientations, directional terms may be used for illustrative purposes instead of limitative purposes. It is to be understood that other aspects may be utilized and structural or logical changes may be made without departing from the concepts of the present invention. Accordingly, the following detailed description should not be taken in a limiting sense.

It should be understood that various features of some embodiments of the present invention described here may be combined with one another unless specifically noted otherwise. As used here, the term "and/or" includes any one of the associated listed items and any combination of any two or more of the associated listed items. Similarly, "at least one of..." includes any one of the associated listed items and any combination of any two or more of the associated listed items.

It should be understood that unless otherwise explicitly specified and limited, the terms "join", "attach", "mount", "connect", "fix" and the like used in the embodiments of the present invention should be interpreted broadly. For example, they may denote a fixed connection, a detachable connection, an integrated connection, a mechanical connection, an electric connection, communication with each other, a direct connection, an indirect connection through an intermediate medium, communication inside two elements, or an interaction relation of two elements. For those of ordinary skill in the art, the specific meanings of the above terms here can be understood according to specific circumstances.

Furthermore, the word "on" as used in reference to a component, element, or material layer formed "on" or located "on" a surface may be used here to mean that the component, element, or material layer is "indirectly" located (for example, placed, formed, deposited, etc.) on the surface, such that one or more additional components, elements, or layers are disposed between the surface and the component, element, or material layer. However, the word "on" as used in reference to a component, element, or material layer formed "on" or located "on" a surface may alternatively have a specific meaning optionally: the component, element, or material layer is "directly" located (for example, placed, formed, deposited, etc.) on the surface, for example, makes direct contact with the surface.

Although the terms such as "first", "second" and "third" may be used here to describe various members, components, regions, layers, or sections, these members, components, regions, layers, or sections are not limited by these terms. Rather, these terms are only used to distinguish one member, component, region, layer or section from another member, component, region, layer or section. Thus, a first member, component, region, layer, or section in the instances described here may also be referred to as a second member, component, region, layer, or section without departing from the teachings of the instances. Moreover, the terms "first" and "second" are merely for description and cannot be interpreted as indicating or implying relative importance or implicitly indicating the number of technical features indicated. Thus, the features defined with "first" and "second" can explicitly or implicitly include at least one feature. In the description here, "a plurality of" means at least two, such as two or three unless definitely and specifically limited otherwise.

It should be understood that spatially relative terms, such as "above", "upper", "below", and "lower", are used here to describe a relationship between one element and another element as illustrated in the figures. Such spatially relative terms are intended to encompass different orientations of the device in use or operation in addition to the orientation depicted in the figures. For example, in a case where the device in the figures is turned over, an element described as being "above" or "on" another element would then be "below" or "under" another element. Thus, depending on a spatial orientation of the device, the term "above" encompasses both above and below. The device may have other orientations (for example, rotated 90 degrees or at other orientations), which should be interpreted by spatially relative terms used here accordingly.

## Claims

1. A circuit (100) for controlling a voltage, comprising:
a plurality of traction battery banks (110);
a first switch (K1), wherein a first terminal of the first switch (K1) is connected to each of the plurality of traction battery banks (110); and
a drive circuit (120), wherein the drive circuit (120) comprises a three-phase inverter (121) and a three-phase motor (122), wherein a midpoint of each of three-phase bridge arms of the three-phase inverter (121) is connected to each of three-phase coils of the three-phase motor (122) respectively,
wherein a first terminal of each of the three-phase bridge arms is connected together to form a first busbar terminal, and a second terminal of each of the three-phase bridge arms is connected together to form a second busbar terminal,
wherein the first busbar terminal is connected to a positive electrode of each of the plurality of traction battery banks (110) and a positive electrode of a charging port, and the second busbar terminal is connected to a negative electrode of each of the plurality of traction battery banks (110) and a negative electrode of the charging port, and
wherein the three-phase motor (122) is connected to a second terminal of the first switch (K1).

2. The circuit (100) for controlling the voltage according to claim 1, wherein the plurality of traction battery banks (110) comprises a first traction battery bank (Bank1) and a second traction battery bank (Bank2), and wherein the circuit (100) for controlling the voltage further comprises:
a second switch (K2), wherein the second switch (K2) is connected to the first switch (K1);
wherein a positive electrode of the first traction battery bank (Bank1) is coupled to the first busbar terminal, and a negative electrode of the first traction battery bank (Bank1) is connected to a first terminal of the second switch (K2); and
wherein a positive electrode of the second traction battery bank (Bank2) is connected to a second terminal of the second switch (K2) and the first busbar terminal, and a negative electrode of the second traction battery bank (Bank2) is coupled to the second busbar terminal.

3. The circuit (100) for controlling the voltage according to claim 2, further comprising:
a third switch (K3), wherein a first terminal of the third switch (K3) is connected to the negative electrode of the first traction battery bank (Bank1), and a second terminal of the third switch (K3) is coupled to the negative electrode of the second traction battery bank (Bank2); and
a fourth switch (K4), wherein a first terminal of the fourth switch (K4) is connected to the second terminal of the second switch (K2) and the positive electrode of the second traction battery bank (Bank2), and a second terminal of the fourth switch (K4) is connected to the positive electrode of the first traction battery bank (Bank1).

4. The circuit (100) for controlling the voltage according to claim 3, further comprising:
a fifth switch (K5), wherein a first terminal of the fifth switch (K5) is connected to the first traction battery bank (Bank1) and the fourth switch (K4), and a second terminal of the fifth switch (K5) is connected to the first busbar terminal; and
a sixth switch (K6), wherein a first terminal of the sixth switch (K6) is connected to the third switch (K3) and the second traction battery bank (Bank2), and a second terminal of the sixth switch (K6) is connected to the second busbar terminal;

5. The circuit (100) for controlling the voltage according to claim 4, wherein the drive circuit (120) further comprises:
a drive capacitor (Cx), wherein a first terminal of the drive capacitor (Cx) is connected to the second terminal of the fifth switch (K5) and the first busbar terminal, and a second terminal of the drive capacitor (Cx) is connected to the second terminal of the sixth switch (K6) and the second busbar terminal.

6. The circuit (100) for controlling the voltage according to claim 4, further comprising:
a seventh switch (K7), wherein a first terminal of the seventh switch (K7) is connected to the first busbar terminal, and a second terminal of the seventh switch (K7) is connected to the positive electrode of the charging port; and
an eighth switch (K8), wherein a first terminal of the eighth switch (K8) is connected to the second busbar terminal, and a second terminal of the eighth switch (K8) is connected to the negative electrode of the charging port.

7. The circuit (100) for controlling the voltage according to claim 6, wherein the circuit (100) is configured to:
control the third switch (K3) and the fourth switch (K4) to be closed to implement dual-bank parallel connection;
control the first switch (K1) and the sixth switch (K6) to be closed to implement energization on a low-voltage side; and
control the seventh switch (K7) and the eighth switch (K8) to be closed to implement energization of the charging port.

8. The circuit (100) for controlling the voltage according to claim 7, wherein the circuit (100) is further configured to:
control an upper bridge arm of each of the three-phase bridge arms to be closed to cause a charging pile to charge each of the plurality of traction battery banks (110) and each of the three-phase coils;
control the upper bridge arm of each of the three-phase bridge arms to be opened, and control a lower bridge arm of each of the three-phase bridge arms to be closed to cause each of the three-phase coils to charge each of the plurality of traction battery banks (110), and
repeatedly control the upper bridge arm of each of the three-phase bridge arms to be closed, control the upper bridge arm of each of the three-phase bridge arms to be opened, and control the lower bridge arm of each of the three-phase bridge arms to be closed to implement step-down charging.

9. The circuit (100) for controlling the voltage according to any one of claims 1 to 8, wherein the midpoint of each of three-phase bridge arms of the three-phase inverter (121) is connected to a first terminal of each of three-phase coils of the three-phase motor (122) respectively, and a second terminal of each of the three-phase coils of the three-phase motor (122) is connected together to form a neutral point, wherein the neutral point is connected to the second terminal of the first switch (K1); or
a first terminal of a phase coil among the three-phase coils of the three-phase motor (122) is connected to the second terminal of the first switch (K1), and a second terminal of each of the three-phase coils of the three-phase motor (122) is connected together.

10. A vehicle (900), comprising a circuit (100) for controlling a voltage according to one of claims 1 to 9.
